# EUROPÄISCHE PATENTANMELDUNG

(11) **EP 2 050 340 A1**
(43) Veröffentlichungstag der Anmeldung: **22.04.2009**
(21) Anmeldenummer: 07118500.3
(22) Anmeldetag: 15.10.2007
(51) Int. Cl.: A23C 9/13, A23C 11/10, A23L 1/308, A23L 1/22

(54) **Grundstoffkombination für Milcherzeugnisse**

(71) Anmelder: Döhler GmbH, 64295 Darmstadt (DE)
(72) Erfinder: Bonerz, Daniel Dr., 64624 Bensheim (DE); Oehming, Monika, 64287 Darmstadt (DE)
(74) Vertreter: Schreiber, Christoph

(57) **Zusammenfassung**

Grundstoffkombination enthaltend
- mindestens zwei Süßungsmittel ausgewählt aus Cyclamat und dessen Salzen, Saccharin und dessen Salzen, Sucralose, Neohesperidin DC, Acesulfam K, Sucralose, Neotame, Thaumatin, Mogroside (Luo han Guo), Zuckeralkohlen, Stevia und daraus hergestellte Extrakte sowie Extraktfraktionen
- mindestens einen löslichen Ballaststoff
- sowie gegebenenfalls Verdickungsmittel
- sowie gegebenenfalls Kohlenhydrate.

## Beschreibung

Die vorliegende Erfindung betrifft eine Grundstoffkombination und Milcherzeugnisse sowie Milchersatzprodukte enthaltende Grundstoffkombinationen.

Viele industriell hergestellte Lebensmittel, beispielsweise Getränke, werden hergestellt durch das Vermischen verschiedener industriell vorgefertigter Substanzen, die üblicherweise als Grundstoffe oder Grundstoffzubereitungen/- kombinationen bezeichnet werden. Entsprechende Produkte werden in Form von Pulvern, Sirupen oder Konzentraten hergestellt und häufig von anderen Unternehmen vor der Abfüllung in das Verkaufsgebinde auf Trinkstärke verdünnt sowie gegebenenfalls mit weiteren Inhaltsstoffen versetzt.

Beim Verbraucher erfreuen sich auch Produkte auf Milchbasis großer Beliebtheit, beispielsweise Trinkjoghurts, Desserts, Quarkerzeugnisse etc., die mit Geschmacksstoffen, Früchten etc. versetzt sein können. Auf der einen Seite ist das in Milchprodukten vorhandene Fett wichtig für den Geschmackseindruck beim Verzehr, auf der anderen Seite werden im Hinblick auf eine Kalorienreduktion vom Verbraucher fettarme Produkte gewünscht.

EP 0 946 112 B1 offenbart die Verwendung von Oligosacchariden zur Verstärkung der Süßkraft und zur Geschmacksverbesserung.

EP 1 051 082 B1 offenbart aromatisierte Getränkeprodukte, die wasserunlösliche und wasserlösliche Komponenten enthalten.

Aufgabe der vorliegenden Erfindung war es, Produkte zur Verfügung zu stellen, die auf der einen Seite fettreduziert sind und auf der anderen Seite geschmacklich entsprechenden fetthaltigen Produkten im wesentlichen entsprechen.

Eine weitere Aufgabe der Erfindung ist es, Produkte zur Verfügung zu stellen, die bei gleicher Fettstufe sensorisch einen besseren Süßungseindruck hervorrufen.

Überraschenderweise kann die Aufgabe gelöst werden durch eine Grundstoffkombination enthaltend
- mindestens zwei Süßungsmittel ausgewählt aus Cyclamat und dessen Salzen, Saccharin und dessen Salzen, Sucralose, Neohesperidin DC, Acesulfam K, Sucralose, Neotam, Thaumatin, Mogroside (Luo han Guo), Zuckeralkohlen, Stevia und daraus hergestellte Extrakte sowie Extraktfraktionen
- mindestens einen löslichen Ballaststoff
- sowie gegebenenfalls Verdickungsmittel
- sowie gegebenenfalls Kohlenhydrate.

Die Grundstoffkombination enthält also zum einen eine Mischung von mindestens zwei Süßungsmitteln. Erfindungsgemäß wird es bevorzugt, wenn die Grundstoffkombination frei ist von Aspartam. Es können statt einer Zweierkombination auch Dreierkombinationen, Viererkombinationen etc. eingesetzt werden. Eine besonders bevorzugte Dreierkombination ist Sucralose, Na-Cyclamat und Na-Saccharin.

Als weiterer Inhaltsstoff ist ein löslicher Ballaststoff enthalten. Lösliche Ballaststoffe können beispielsweise aus Polydextrose, Inulin, Fructo-Oligosacchariden, Galacto-Oligosacchariden, Arabinogalactan, resistentem Maltodextrin, Weizendextrin, Maisdextrin, Pektin oder Mischungen davon ausgewählt werden.

Optional kann das Produkt ein Verdickungsmittel enthalten. Als geeignete Verdickungsmittel sind insbesondere Guargum, Pektine, Stärken, Xanthan, Carboxymethylcellulose, Johannisbrotkernmehl, Tarakernmehl, Konjacmehl oder Mischungen davon zu nennen.

Weiterhin kann die Grundstoffkombination Kohlenhydrate enthalten, beispielsweise Fructose, Isomaltulose, Trehalose, Tagatose, Saccharose, Glucose oder Mischungen davon.

Gegenstand der Erfindung ist auch ein Milcherzeugnis, das ein Milchprodukt mit einem Fettgehalt ≤ 0,5 % und die erfindungsgemäße Grundstoffkombination enthält. Trotz des geringen Fettgehalts zeigt das Milcherzeugnis ein Mundgefühl, das einem deutlich fetthaltigeren Produkt sensorisch entspricht.

In diesem Milcherzeugnis liegt der Gehalt an erfindungsgemäßen Süßstoffen bevorzugt im Bereich von 0,01 bis 3 g/l, der Gehalt an löslichen Ballaststoffen liegt bevorzugt im Bereich von 1 bis 30 g/l. Darüber hinaus kann das Milcherzeugnis Verdickungsmittel enthalten, die in einer Menge von etwa 0 bis 70 g/l anwesend sind. Die Menge an Kohlenhydraten, die der Grundstoffkombination zugesetzt wird, liegt bevorzugt zwischen 0 und 40 g/l.

Geeignete Milcherzeugnisse sind Milchmischerzeugnisse, Trinkjoghurts, Desserts (sauer oder neutral), Quarkerzeugnisse und/oder Molkenerzeugnisse. Alternativ kann statt eines milchbasierten Produktes auch ein Milchersatzprodukt eingesetzt werden, so dass Gegenstand der Erfindung auch ein Milchersatzprodukt auf Basis von Soja, Reis und/oder Hafer (sogenannte Soja-, Reis- bzw. Haferdrinks) ist, das die erfindungsgemäße Grundstoffkombination enthält.

Weiterhin ist Gegenstand der Erfindung die Verwendung der erfindungsgemäßen Grundstoffkombination zur Verbesserung des Mundgefühls eines Milcherzeugnisses oder Milchersatzproduktes. Überraschenderweise ist ein Trinkjoghurt, der 0,1 % Fett und die erfindungsgemäße Grundstoffkombination enthält, sensorisch vergleichbar zu einem - wie in Molkereiprodukten üblich - mit einer AcesulfamK/Aspartam-Kombination gesüßten Trinkjoghurt mit 1,8 % Fett. Für die Kombination wird darüber hinaus auch der Süßstoff-gesüßten Getränken eigene Geschmack vermieden, so dass vom Süßeindruck der die erfindungsgemäße Grundstoffkombination enthaltende Trinkjoghurt einem saccharosegesüßten Produkt mit gleichem Fettgehalt entspricht. Entscheidender ist jedoch, dass der fehlende Fettgehalt der Milch ersetzt werden kann. Gegenüber anderen Produkten ist es besonders vorteilhaft, dass die eingesetzten Süßstoffe chemisch stabil sind, insbesondere, da auf das hydrolyseempfindliche Aspartam verzichtet werden kann.

Die Erfindung wird durch das folgende Beispiel näher erläutert.

### Beispiel

Drei in ihrer Süßungskomponente und dem Fettgehalt unterschiedlich zusammengesetzte Pfirsich-Trinkjoghurt-Varianten wurden einem sensorischen Vergleich unterzogen.
Variante A (Referenz 1)
Enthält je 90 mg/kg Acesulfam K und Aspartam sowie 1,8 % Fett.
Variante B (erfindungsgemäße Variante)
Enthält eine Kombination aus Na-Saccharin (33 mg/kg), Na-Cyclamat (149 mg/kg), Sucralose (55 mg/kg) und 8 g/kg Fructose als Süßungskombination, sowie 10 g/kg löslichen Ballaststoff (Polydextrose). Der Fettgehalt liegt bei 0,1 %.
Variante C (Referenz 2)
Enthält je 90 mg/kg Acesulfam K und Aspartam sowie 0,1 % Fett und 8 g/kg Fructose.
Ergebnis
Variante C wird in einem Beliebtheitstest am schlechtesten beurteilt (künstlich, fehlendes Mundgefühl, leer).

Variante A wird aufgrund des höheren Fettgehalts sensorisch deutlich besser beurteilt als Variante C (cremig, negative Attribute der künstlichen Süßung reduziert).

Am besten, jedoch alles in allem vergleichbar zu A, schneidet die erfindungsgemäße Variante B ab, die trotz des geringen Fettgehalts ein volles Mundgefühl aufweist.

## Patentansprüche

1. Grundstoffkombination enthaltend
- mindestens zwei Süßungsmittel ausgewählt aus Cyclamat und dessen Salzen, Saccharin und dessen Salzen, Sucralose, Neohesperidin DC, Acesulfam K, Sucralose, Neotame, Thaumatin, Mogroside (Luo han Guo), Zuckeralkohlen, Stevia und daraus hergestellte Extrakte sowie Extraktfraktionen
- mindestens einen löslichen Ballaststoff
- sowie gegebenenfalls Verdickungsmittel
- sowie gegebenenfalls Kohlenhydrate.

2. Grundstoffkombination nach Anspruch 1, **dadurch gekennzeichnet, dass** kein Aspartam enthalten ist.

3. Grundstoffkombination nach Anspruch 1 oder 2, **dadurch gekennzeichnet, dass** Sucralose, Na-Cyclamat und Na-Saccharin enthalten sind.

4. Grundstoffkombination nach mindestens einem der Ansprüche 1 bis 3, **dadurch gekennzeichnet, dass** der lösliche Ballaststoff aus Polydextrose, Inulin, Fructo-Oligosacchariden, Galacto-Oligosacchariden, Arabinogalactan, resistentem Maltodextrin, Weizendextrin, Maisdextrin, Pektin oder Mischungen davon ausgewählt wird.

5. Grundstoffkombination nach mindestens einem der Ansprüche 1 bis 4, **dadurch gekennzeichnet, dass** die Verdickungsmittel ausgewählt werden aus Guargum, Pektinen, Stärken, Xanthan, Carboxymethylcellulose, Johannisbrotkernmehl, Tarakernmehl, Konjacmehl oder Mischungen davon.

6. Grundstoffkombination nach mindestens einem der Ansprüche 1 bis 5, **dadurch gekennzeichnet, dass** das/die Kohlenhydrat(e) ausgewählt werden aus Fructose, Isomaltulose, Trehalose, Tagatose, Saccharose, Glucose oder Mischungen davon.

7. Milcherzeugnis enthaltend ein Milchprodukt mit einem Fettgehalt ≤ 0,5 % und das Grundstoffprodukt nach mindestens einem der Ansprüche 1 bis 6.

8. Milcherzeugnis nach Anspruch 7, **dadurch gekennzeichnet, dass** der Gehalt an Süßungsmitteln 0,01 bis 3 g/l beträgt.

9. Milcherzeugnis nach Anspruch 7 oder 8, **dadurch gekennzeichnet, dass** der Gehalt an löslichem Ballaststoff 1 bis 30 g/l beträgt.

10. Milcherzeugnis nach einem der Ansprüche 7 bis 9, **dadurch gekennzeichnet, dass** der Gehalt an Verdickungsmitteln 0 bis 70 g/l beträgt und/oder der Gehalt an Kohlenhydraten im Bereich von 0 bis 40 g/l liegt.

11. Milcherzeugnis nach einem der Ansprüche 7 bis 10, **dadurch gekennzeichnet, dass** das Milcherzeugnis ein Milchmischerzeugnis, ein Trinkjoghurt, ein Dessert (sauer oder neutral), ein Quarkerzeugnis oder ein Molkenerzeugnis ist.

12. Milchersatzprodukt auf Basis von Soja, Reis und/oder Hafer enthaltend eine Grundstoffkombination und einen der Ansprüche 1 bis 6.

13. Erzeugnis enthaltend mind. 10 % eines Milchbestandteils und das Grundstoffprodukt nach mindestens einem der Ansprüche 1 bis 6.

14. Verwendung einer Grundstoffkombination nach mindestens einem der Ansprüche 1 bis 6 zur Verbesserung des Mundgefühls eines Milcherzeugnisses oder Milchersatzproduktes oder eines Erzeugnisses enthaltend mindestens 10 % Milchbestandteil.
